# EUROPEAN PATENT APPLICATION

(11) **EP 1 988 730 A1**
(43) Date of publication of application: **05.11.2008**
(21) Application number: 06834681.6
(22) Date of filing: 14.12.2006
(51) Int. Cl.: H04Q 7/38, H04L 12/28, H04L 12/56, H04L 12/66

(54) **RADIO ACCESS SYSTEM AND RADIO ACCESS METHOD**

(30) Priority: 22.02.2006 JP 2006044933
(71) Applicant: NEC Corporation, Minato-ku Tokyo 108-8001 (JP)
(72) Inventor: OGURA, Daisuke, Tokyo 108-8001 (JP)
(74) Representative: Glawe, Delfs, Moll
(86) International application number: PCT/JP2006/324927
(87) International publication number: WO 2007/097101

(57) **Abstract**

A policy control device (9) is installed as a gateway to a 3GPP network (7) between a WLAN-AP (4) and authentication server (5) in a WLAN network (2). On the basis of the type (EAP type) of authentication method of an authentication message transmitted from a WLAN terminal (1), the policy control device (9) determines whether to transfer the authentication message to the 3GPP network (7) or to the WLAN network (2) or an ISP network (3), and transfers the authentication message to the determined transfer destination network. Since this allows only EAP-AKA authentication messages to be transferred to the 3GPP network (7), the processing load on an intra-3GPP authentication server (8) reduces.

## Description

### Technical Field

The present invention relates to a wireless access system and wireless access method of connecting a wireless terminal to a network via a wireless access point.

### Background Art

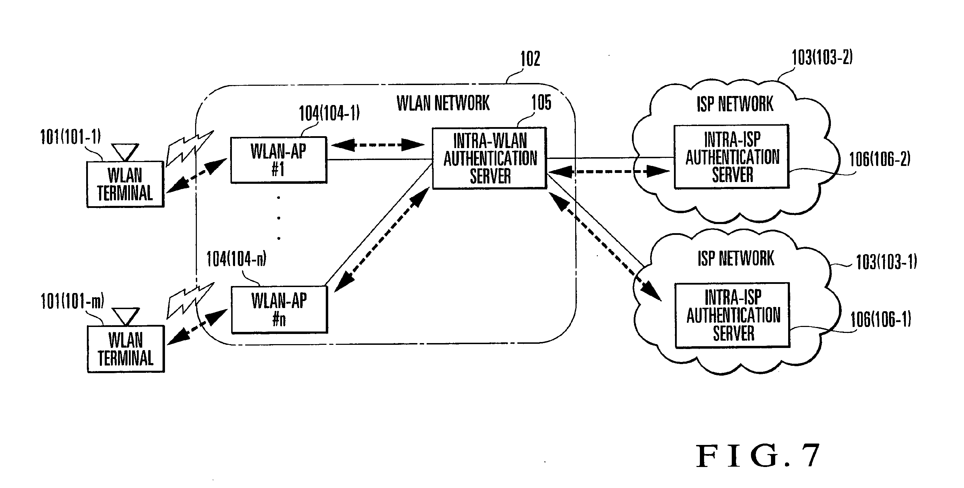

Fig. 7 shows the image of the connection between a conventional wireless LAN (WLAN: Wireless Local Area Network) and ISP (Internet Service Provider) networks. Referring to Fig. 7, a WLAN network 102 and ISP networks (Internet) 103 (103-1 and 103-2) are connected to each other. A plurality of wireless terminals (WLAN terminals) 101 (101-1 to 101-m) can wirelessly connect to the WLAN network 102. The WLAN network 102 includes wireless access points (WLAN-APs) 104 (104-1 to 104-n) and an authentication server (intra-WLAN authentication server) 105. The ISP networks 103 (103-1 and 103-2) respectively include authentication servers (intra-ISP authentication servers) 106 (106-1 and 106-2). In Fig. 7, the dotted arrows indicate the exchange of messages when performing authentication on the ISP networks 103 (103-1 and 103-2).

In this wireless access system, an authentication message from the WLAN terminal 101 is transmitted to the intra-WLAN authentication server 105 via the WLAN-AP 104. The intra-WLAN authentication server 105 checks identification information (SID (Supplicant ID)) contained in the authentication message from the WLAN terminal 101. If this SID indicates a registered terminal in the WLAN network 102, the intra-WLAN authentication server 105 advances the authentication process. If the SID indicates not a registered terminal in the WLAN network 102 but a registered terminal in the ISP network 103, the intra-WLAN authentication server 105 transfers the authentication message to the authentication server 106 of the corresponding ISP network 103 (e.g., Japanese Patent Laid-Open No. 2003-289331 (reference 1)).

In 3GPP (Third Generation Partnership Project) standardization, specifications for connecting the WLAN network 102 and a 3GPP network (mobile communication network) are presently being examined. At present, no specific conditions are required of the WLAN network 102 in the cooperation between the WLAN network 102 and a 3GPP network.

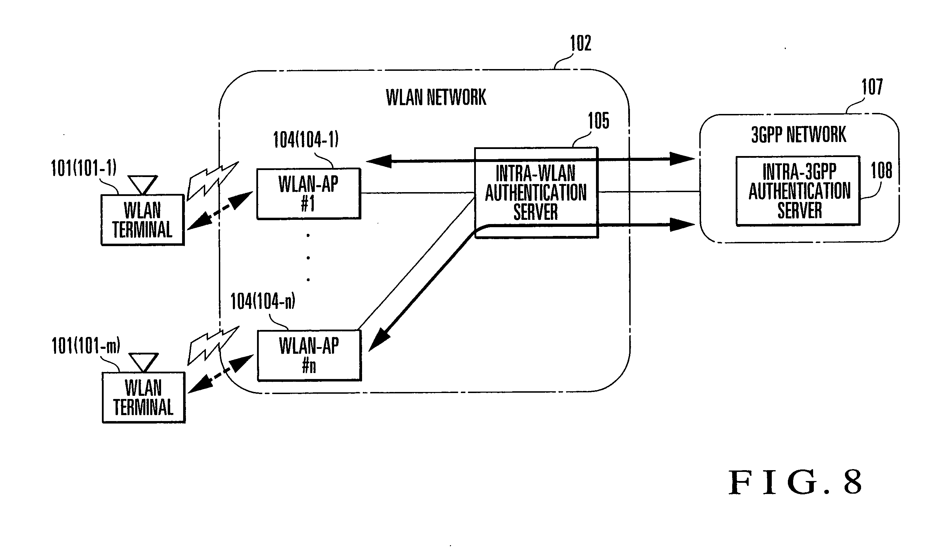

Fig. 8 shows the image of the connection between the WLAN network and a 3GPP network. Referring to Fig. 8, the solid arrows indicate the exchange of messages when performing authentication on a 3GPP network 107.

In Fig. 8, an authentication message from the WLAN terminal 101 is transmitted to the 3GPP network 107 through the intra-WLAN authentication server 105. No problem arises when the WLAN network 102 is thus constructed as a dedicated network for connecting to the 3GPP network 107.

### Disclosure of Invention

### Problem to be Solved by Invention

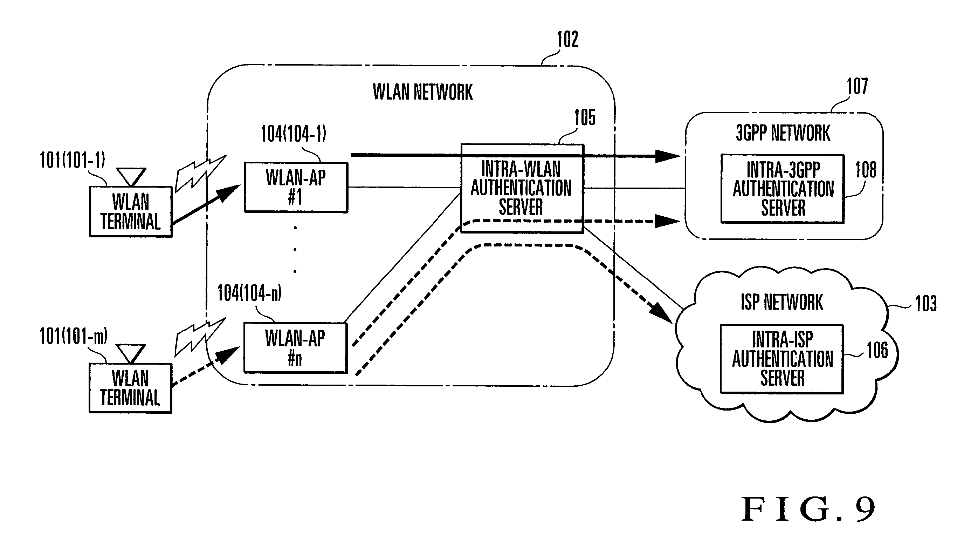

When connecting to the network of a WLAN operator providing the existing WLAN service or to an office network, however, not only the 3GPP network 107 but also the WLAN terminals 101 connecting to the ISP network 103 exist as shown in Fig. 9. Note that in Fig. 9, the solid arrows indicate the exchange of messages when performing authentication on the 3GPP network 107, and the dotted arrows indicate the exchange of messages when performing authentication on the ISP network 103.

Referring to Fig. 9, an authentication message from the WLAN terminal 101 is transmitted to the 3GPP network 107 through the intra-WLAN authentication server 105, regardless of whether the authentication message is addressed to the 3GPP network 107. That is, when the authentication message is an EAP (PPP Extensible Authentication Protocol) message, this EAP message is unconditionally transmitted to the 3GPP network 107 regardless of the type (an authentication method such as EAP-AKA, EAP-MD5, EAP-TLS, or EAP-SIM) of EAP (e.g., Japanese Patent Laid-Open No. 2005-524341 (reference 2) and Japanese Patent Laid-Open No. 2005-531986 (reference 3)). This increases the processing load on an authentication server (intra-3GPP authentication server) 108 in the 3GPP network 107.

The present invention has been made to solve the above problem, and has as its object to reduce the processing load on an authentication server in a mobile communication network.

### Means for Solving the Problem

To achieve the above object, a wireless access system of the present invention comprises transfer destination network determining means for determining, on the basis of the type of authentication method of an authentication message transmitted from a wireless terminal, whether to transfer the authentication message to a mobile communication system or a network other than the mobile communication network, and authentication message transferring means for transferring the authentication message to a transfer destination network determined by the transfer destination network determining means.

Also, a wireless access method of the present invention comprises the steps of causing a computer to determine, on the basis of the type of authentication method of an authentication message transmitted from a wireless terminal, whether to transfer the authentication message to a mobile communication network or a network other than the mobile communication network, and transferring the authentication message to a determined transfer destination network. Effects of Invention

The present invention determines, on the basis of the type of authentication method of an authentication message transmitted from a wireless terminal, whether to transfer the authentication message to a mobile communication network or a network other than the mobile communication network. For example, the present invention can reduce the processing load on an authentication server in the mobile communication network by transferring only EAP-AKA authentication messages to the mobile communication network. Brief Description of Drawings
Fig. 1 is a view showing the image of the connection of a wireless access system according to an exemplary embodiment of the present invention;
Fig. 2 is a view showing the image of an authentication process sequence when a WLAN terminal connects to a 3GPP network in the wireless access system shown in Fig. 1;
Fig. 3 is a view showing the image of an authentication process sequence when the WLAN terminal connects to an ISP network in the wireless access system shown in Fig. 1;
Fig. 4 is a view showing the image of an authentication process sequence when the WLAN terminal connects to a WLAN network in the wireless access system shown in Fig. 1;
Fig. 5 is a view for explaining an example in which a policy control device shown in Fig. 1 has a segregation control function;
Fig. 6 is a block diagram showing the functions of the WLAN network;
Fig. 7 is a view showing the image of the connection between a conventional WLAN network and ISP networks;
Fig. 8 is a view showing the image of the connection between the WLAN network and a 3GPP network; and
Fig. 9 is a view showing the image of the connection between the WLAN network, 3GPP network, and ISP network.

### Best Mode for Carrying Out the Invention

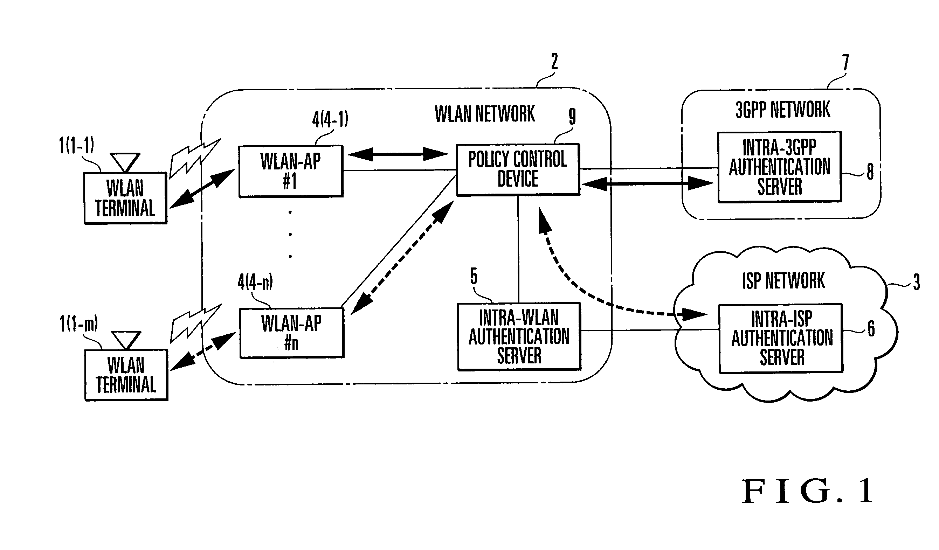

Exemplary embodiments of the present invention will be explained in detail below with reference to the accompanying drawings. Fig. 1 shows the image of the connection of a wireless access system according to an exemplary embodiment of the present invention. Referring to Fig. 1, a WLAN network 2 is connected to an ISP network (Internet) 3 and 3GPP network (mobile communication network) 7. A plurality of wireless terminals (WLAN terminals) 1 (1-1 to 1-m) can wirelessly connect to the WLAN network 2.

The WLAN network 2 includes at least one wireless access point (WLAN-AP) 4 (4-1 to 4-n), an authentication server (intra-WLAN authentication server) 5, and a policy control device 9. The ISP network 3 includes an authentication server (intra-ISP authentication server) 6. The 3GPP network 7 includes an authentication server (intra-3GPP authentication server) 8.

Referring to Fig. 1, the solid arrows indicate the exchange of messages when performing authentication on the 3GPP network 7, and the dotted arrows indicate the exchange of messages when performing authentication on the ISP network 3.

In this exemplary embodiment, the policy control device 9 as a gateway to the 3GPP network 7 is installed between the wireless access points 4 and authentication server 5 in the WLAN network 2. The policy control device 9 is implemented by hardware including a processor and memory, and a program for implementing various functions in cooperation with the hardware.

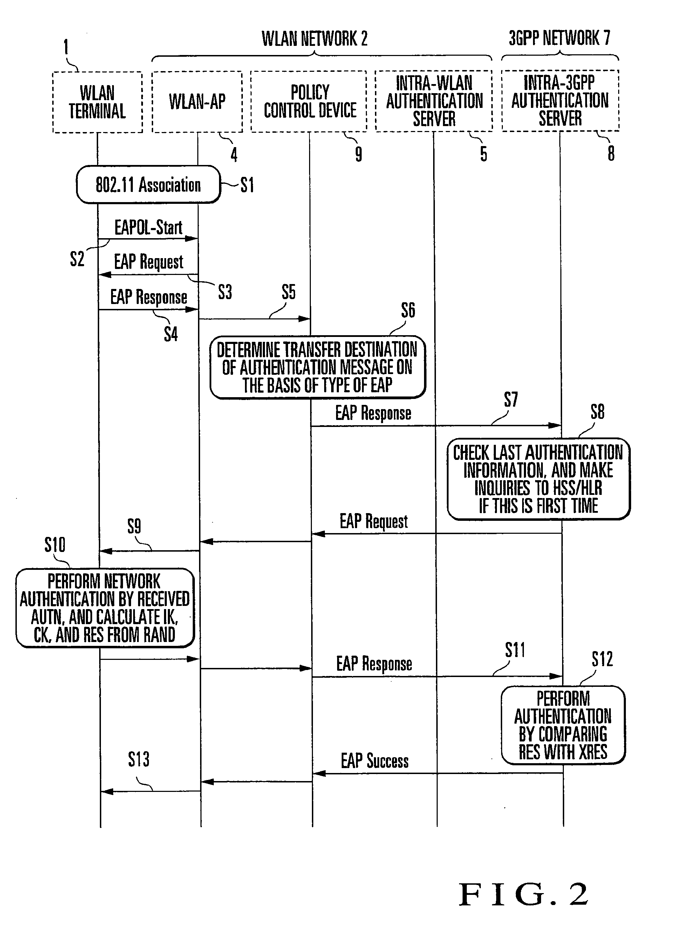

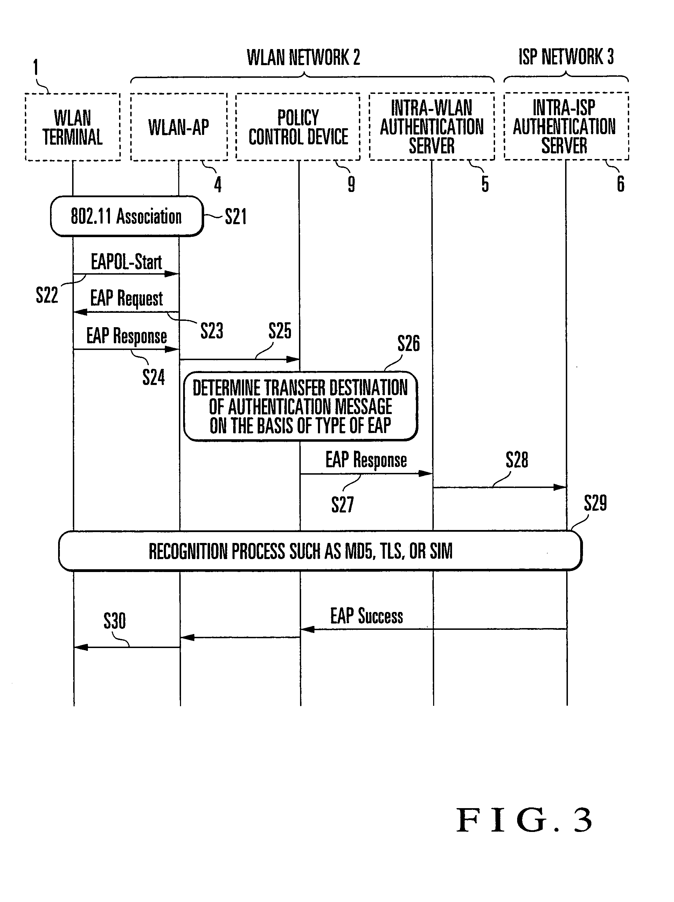

As a function unique to this exemplary embodiment, the policy control device 9 has a transfer destination determining function of determining, on the basis of the type of authentication method of an authentication message transmitted from the WLAN terminal 1 via the WLAN-AP 4, whether to transfer the authentication message to the 3GPP network 7 or a network (in this example, the WLAN network 2 or ISP network 3) other than the 3GPP network 7. The transfer destination network determining function of the policy control device 9 will be explained below with reference to sequences shown in Figs. 2 and 3.

### [Authentication Process When WLAN Terminal Connects to 3GPP Network]

An authentication process sequence when the WLAN terminal 1 connects to the 3GPP network 7 will be explained below with reference to Fig. 2.

The WLAN terminal 1 performs the "802.11 Association process" defined by IEEE with respect to the WLAN-AP 4 (step S1), and transmits an authentication process start message (EAPOL-Start) to the WLAN-AP 4 (step S2).

To start the authentication process, the WLAN-AP 4 having received the authentication process start message from the WLAN terminal 1 transmits a request message (EAP Request/Identity) to the WLAN terminal 1 (step S3).

In response to the request message from the WLAN-AP 4, the WLAN terminal 1 returns an EAP message (EAP Response/Identity (NAI and IMSI)) containing NAI (Network Access Identity) and IMSI (International Mobile Subscriber Identity) as an authentication message to the WLAN-AP 4 (step S4). The WLAN-AP 4 transfers the authentication message from the WLAN terminal 1 to the policy control device 9 (step S5). Assume that in this example, the type (EAP type) of authentication method of the authentication message from the WLAN terminal 1 is EAP-AKA.

On the basis of the type (EAP type) of authentication method of the transferred authentication message, the policy control device 9 determines whether the authentication message is an authentication request to the 3GPP network 7 (step S6). If the EAP type is EAP-AKA, the policy control device 9 determines that the authentication message is an authentication request to the 3GPP network 7. If the EAP type is not EAP-AKA but EAP-MD5, EAP-TLS, EAP-SIM, or the like, the policy control device 9 determines that the authentication message is an authentication request to a network other than the 3GPP network 7. In this case, the policy control device 9 determines that the transfer destination network of the authentication message is the 3GPP network 7, because the EAP type is EAP-AKA.

The policy control device 9 specifies the authentication server 8 of the 3GPP network 7 as the transfer destination, i.e., specifies the carrier of the mobile communication service, on the basis of NAI (Network Access Identity) contained in the authentication message, and transfers the authentication message (EAP Response/NAI and IMSI) to the authentication server (intra-3GPP authentication server) 8 of the carrier (step S7).

The intra-3GPP authentication server 8 receives the authentication message transferred from the policy control device 9, and performs an authentication process on the WLAN terminal 1 as the transmission source of the authentication message. Note that in processing after that, the policy control device 9 exclusively transfers messages. Also, the intra-3GPP authentication server 8 checks the last authentication information (RAND (the random number of an authentication vector), AUTN (an authentication token), XRES (an authentication response), IK (an integrity key), and CK (a cipher key). If this is the first time, the intra-3GPP authentication server 8 makes inquiries to an HSS (Home Subscriber Server)/HLR (Home Location Register) (not shown) (step S8).

The WLAN terminal 1 receives a request message (EAP Request/AkA Challenge) from the intra-3GPP authentication server 8 (step S9). This request message contains "RAND", "AUTN", and "temporaty identifier". The WLAN terminal 1 performs authentication by "AUTN", and calculates "IK, CK, and RES" from "RAND" (step S10). The WLAN terminal 1 returns "RES" on a response message (EAP Response/AkA Challenge) to the intra-3GPP authentication server 8 (step S11).

The intra-3GPP authentication server 8 performs authentication by comparing "RES" transmitted from the WLAN terminal 1 with "XRES" (step S12). If "RES" and "XRES" match, the intra-3GPP authentication server 8 transmits a confidential key (Key Material) to the WLAN terminal 1 (step S13), and completes the authentication process.

### [Authentication Process When WLAN Terminal Connects to ISP Network]

An authentication process sequence when the WLAN terminal 1 connects to the ISP network 3 will be explained below with reference to Fig. 3. The WLAN terminal 1 performs the "802.11 Association" process defined by IEEE with respect to the WLAN-AP 4 (step S21), and transmits an authentication process start message (EAPOL-Start) to the WLAN-AP 4 (step S22).

To start the authentication process, the WLAN-AP 4 having received the authentication process start message from the WLAN terminal 1 transmits a request message (EAP Request/Identity) to the WLAN terminal 1 (step S23).

In response to the request message from the WLAN-AP 4, the WLAN terminal 1 returns an EAP message (EAP Response/Identity (Supplicant ID)) containing SID (Supplicant ID) as an authentication message to the WLAN-AP 4 (step S24). The WLAN-AP 4 transfers the authentication message from the WLAN terminal 1 to the policy control device 9 (step S25). Assume that in this example, the type (EAP type) of authentication method of the authentication message from the WLAN terminal 1 is not EAP-AKA but EAP-MD5, EAP-TLS, EAP-SIM, or the like.

On the basis of the type (EAP type) of authentication method of the transferred authentication message, the policy control device 9 determines whether the authentication message is an authentication request to the 3GPP network 7 (step S26). If the EAP type is EAP-AKA, the policy control device 9 determines that the authentication message is an authentication request to the 3GPP network 7. If the EAP type is not EAP-AKA but EAP-MD5, EAP-TLS, EAP-SIM, or the like, the policy control device 9 determines that the authentication message is an authentication request to a network other than the 3GPP network 7.

In this case, the policy control device 9 determines that the transfer destination network of the authentication message is a network other than the 3GPP network 7, because the EAP type is not EAP-AKA but EAP-MD5, EAP-TLS, EAP-SIM, or the like. The policy control device 9 transfers the authentication message to the intra-WLAN authentication server 5 (step S27).

The intra-WLAN authentication server 5 checks SID contained in the authentication message from the policy control device 9. If SID indicates a registered terminal in the ISP network 3, the intra-WLAN authentication server 5 transfers the authentication message to the authentication server (intra-ISP authentication server) 6 of the corresponding ISP network 3 (step S28). The intra-ISP authentication server 6 receives the authentication message transferred from the intra-WLAN authentication server 5, and performs an authentication process on the WLAN terminal 1 as the transmission source of the authentication message (step S29). If the authentication is successful, the intra-ISP authentication server 6 transmits a confidential key (Key Material) to the WLAN terminal 1 (step S30).

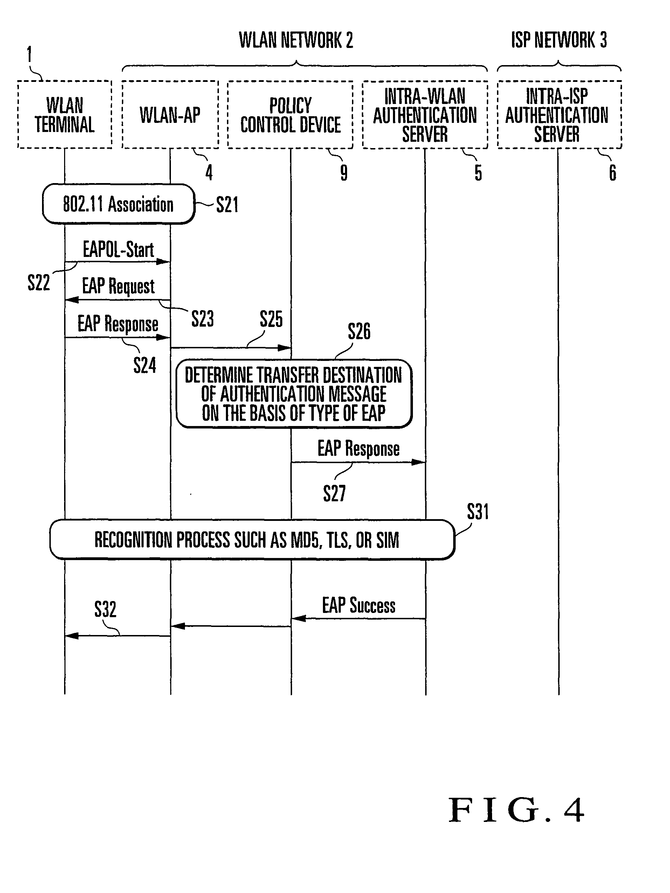

Note that if SID contained in the authentication message from the policy control device 9 indicates a registered terminal in the WLAN network 2, the intra-WLAN authentication server 5 performs an authentication process (step S31) as shown in Fig. 4. If the authentication is successful, the intra-WLAN authentication server 5 transmits a confidential key (Key Material) to the WLAN terminal 1 (step S32).

In this exemplary embodiment as described above, on the basis of the type of authentication method of an authentication message transmitted from the WLAN terminal 1 via the WLAN-AP 4, the policy control device 9 determines whether to transfer the authentication message to the 3GPP network 7 or a network other than the 3GPP network 7. Since, therefore, EAP-AKA authentication messages alone are transmitted to the 3GPP network 7, the processing load on the intra-3GPP authentication server 8 reduces.

Also, in this exemplary embodiment, if the policy control device 9 determines that the transfer destination network of the authentication message is the 3GPP network 7, the policy control device 9 specifies the authentication server 8 of the 3GPP network 7 as the transfer destination on the basis of NAI contained in the authentication message. Accordingly, the authentication message is immediately transferred to the authentication server 8 in the appropriate 3GPP network 7.

Furthermore, in this exemplary embodiment, the policy control device 9 is installed as a gateway to the 3GPP network 7 between the WLAN-AP 4 and intra-WLAN authentication server 5, and given the transfer destination network determining function. This makes cooperation with the 3GPP network 7 possible without giving the intra-WLAN authentication server 5 any function taking account of cooperation with the 3GPP network 7. That is, cooperation with the 3GPP network 7 can be achieved by using the existing intra-WLAN authentication server 5 without affecting an authentication process on the WLAN network 2 or ISP network 3.

### [Call Segregation Control by Policy Control Device]

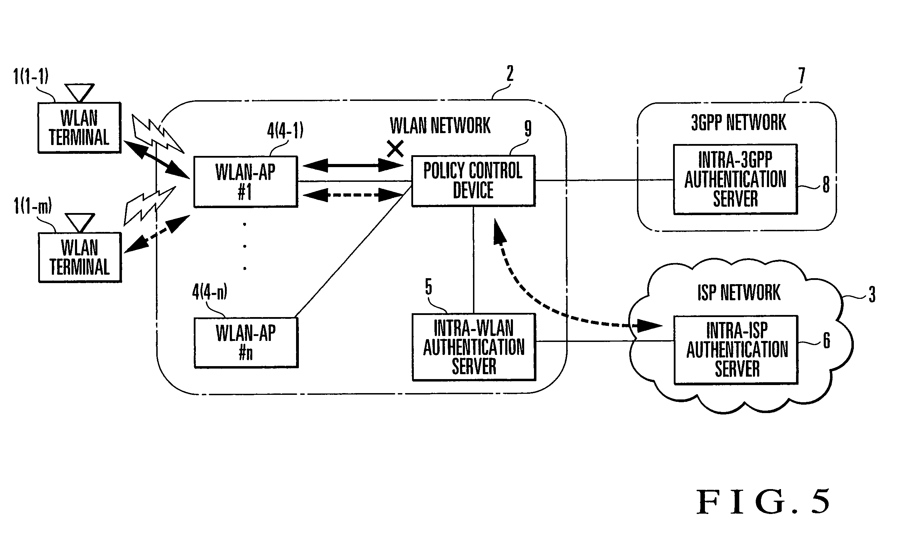

Fig. 5 shows an example in which the policy control device 9 has a segregation control function. Referring to Fig. 5, the solid arrows indicate the exchange of messages when performing authentication on the 3GPP network 7, and the dotted arrows indicate the exchange of messages when performing authentication on the ISP network 3.

In this example, the policy control device 9 has a management table that defines, for each WLAN-AP 4, the number of WLAN terminals 1 connectable to the 3GPP network 7 (the number of 3GPP connectable terminals), and the number of WLAN terminals 1 connectable to a network other than the 3GPP network 7 (the number of ISP connectable terminals). This management table is changeably preset in the policy control device 9 by the manager of the WLAN network 2. Table 1 shows an example of the management table.

**[Table 1]**

| | WLAN-AP#L | WLAN-AP#2 | ··· | WLAN-AP#n |
|---|---|---|---|---|
| Number of 3GGP connectable terminals | 3 | 5 | ··· | 0 |
| Number of ISP connectable terminals | 7 | 5 | ··· | 10 |

The policy control device 9 determines whether the WLAN terminal 1 having requested authentication requests authentication to the 3GPP network 7 or authentication to a network other than the 3GPP network 7, and permits or rejects the authentication request from the WLAN terminal 1 in accordance with the number of 3GPP connectable terminals or the number of ISP connectable terminals in the management table.

For example, when an authentication message transmitted from the WLAN terminal 1-1 via the WLAN-AP 4-1 is an authentication request to the 3GPP network 7 and the number of 3GPP connectable terminals of the WLAN-AP 4-1 is exceeded if this authentication request is permitted, the authentication request from the WLAN terminal 1-1 is rejected. If the number of 3GPP connectable terminals of the WLAN-AP 4-1 is not exceeded, the authentication request from the WLAN terminal 1-1 is permitted.

As described above, the policy control device 9 manages, for each WLAN-AP 4, the number of WLAN terminals 1 connectable to the 3GPP network 7 and the number of WLAN terminals 1 connectable to a network (in this example, the WLAN network 2 and ISP network 3) other than the 3GPP network 7. This makes it possible to perform segregation control of WLAN terminals to be connected to the 3GPP network and a network other than the 3GPP network, and call receiving control.

Accordingly, it is possible to implement traffic control taking account of terminals connected to the 3GPP network 7 and those connected to a network other than the 3GPP network 7, e.g., it is possible to limit authentication messages to the 3GPP network 7. It is also possible to avoid the possibility that a wireless channel is occupied by one of the 3GPP network 7 and a network other than the 3GPP network by the intention of the designer of the WLAN network 2. Furthermore, the policy control device 9 collectively manages the wireless resources of the WLAN network 2. This makes it possible to perform an efficient network operation, e.g., control the activity ratio of the WLAN network 2 by contract with the 3GPP operator.

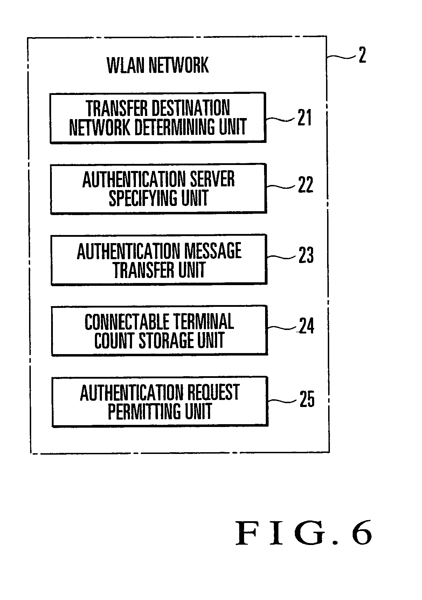

The main functions of the WLAN network 2 described above will be collectively explained below with reference to Fig. 6. The WLAN network 2 comprises a transfer destination network determining unit 21, authentication server specifying unit 22, authentication message transfer unit 23, connectable terminal count storage unit 24, and authentication request permitting unit 25.

The transfer destination network determining unit 21 determines, on the basis of the type of authentication method of an authentication message transmitted from the WLAN terminal 1 via the WLAN-AP 4, whether to transfer the authentication message to the 3GPP network 7 or a network (in this example, the WLAN network 2 or ISP network 3) other than the 3GPP network 7. More specifically, the transfer destination network determining unit 21 performs the processing in step S6 of Fig. 2 and the processing in step S26 of Figs. 3 and 4.

If the transfer destination network determining unit 21 determines that the transfer destination network of the authentication message is the 3GPP network 7, the authentication server specifying unit 22 specifies the authentication server 8 in the 3GPP network 7 as the transfer destination on the basis of NAI contained in the authentication message.

The authentication message transfer unit 23 transfers the authentication message to the transfer destination network determined by the transfer destination network determining unit 21. In particular, the authentication message transfer unit 23 transfers the authentication message to the authentication server 8 specified by the authentication server specifying unit 22. More specifically, the authentication message transfer unit 23 performs the processing in steps S7 and S8 of Fig. 2.

The connectable terminal count storage unit 24 stores the management table as shown in Table 1. The authentication request permitting unit 25 permits the transfer of the authentication message to the transfer destination network determined by the transfer destination network determining unit 21, within the ranges of the number of GPP connectable terminals and the number of ISP connectable terminals in the management table.

Note that in the exemplary embodiment described above, the policy control device 9 is installed between the WLAN-APs 4 and intra-WLAN authentication server 5, and given the transfer destination network determining function. However, the transfer destination network determining function may also be imparted to the intra-WLAN authentication server 5 or WLAN-APs 4.

## Claims

1. A wireless access system **characterized by** comprising:
transfer destination network determining means for determining, on the basis of the type of authentication method of an authentication message transmitted from a wireless terminal, whether to transfer the authentication message to a mobile communication system or a network other than the mobile communication network; and
authentication message transferring means for transferring the authentication message to a transfer destination network determined by said transfer destination network determining means.

2. A wireless access system according to claim 1, **characterized by** further comprising authentication server specifying means for specifying, if said transfer destination network determining means determines that the transfer destination network of the authentication message is the mobile communication network, an authentication server in the transfer destination mobile communication network on the basis of a network access identifier contained in the authentication message,
wherein said authentication message transferring means transfers the authentication message to the authentication server specified by said authentication server specifying means.

3. A wireless access system according to claim 1, **characterized by** further comprising at least one wireless access point which outputs the authentication message transmitted from the wireless terminal to said transfer destination network determining means.

4. A wireless access system according to claim 3, **characterized by** further comprising connectable terminal count storage means for storing, for each of said wireless access points, the number of wireless terminals connectable to the mobile communication network, and the number of wireless terminals connectable to the network other than the mobile communication network.

5. A wireless access system according to claim 4, **characterized by** further comprising authentication request permitting means for permitting transfer of the authentication message to the transfer destination network determined by said transfer destination network determining means, within ranges of the numbers stored in said connectable terminal count storage means.

6. A wireless access system according to claim 1, **characterized by** further comprising a wireless LAN network including said transfer destination network determining means and a wireless access point.

7. A wireless access method **characterized by** comprising the steps of:
causing a computer to determine, on the basis of the type of authentication method of an authentication message transmitted from a wireless terminal, whether to transfer the authentication message to a mobile communication network or a network other than the mobile communication network; and
transferring the authentication message to a determined transfer destination network.

8. A wireless access method according to claim 7, **characterized by** further comprising the step of specifying, if it is determined that the transfer destination network of the authentication message is the mobile communication network, an authentication server in the transfer destination mobile communication network on the basis of a network access identifier contained in the authentication message,
wherein the transfer step comprises the step of transferring the authentication message to the specified authentication server.

9. A wireless access method according to claim 7, **characterized by** further comprising the step of outputting the authentication message from the wireless terminal to the computer via a wireless access point.

10. A wireless access method according to claim 9, **characterized by** further comprising the step of managing, for each of the wireless access points, the number of wireless terminals connectable to the mobile communication network, and the number of wireless terminals connectable to the network other than the mobile communication network.

11. A wireless access method according to claim 9, **characterized by** further comprising the step of permitting, by referring to a table in which the number of wireless terminals connectable to the mobile communication network and the number of wireless terminals connectable to the network other than the mobile communication network are set for each of the wireless access points, transfer of the authentication message to the determined transfer destination network within ranges of the numbers of connectable wireless terminals.
